# EUROPEAN PATENT SPECIFICATION

(11) **EP 2 540 062 B1**
(45) Date of publication and mention of the grant of the patent: **04.12.2013**
(21) Application number: 11707311.4
(22) Date of filing: 25.02.2011
(51) Int. Cl.: H04L 29/08, H04W 80/04

(54) **MOBILITY IN PEER-TO-PEER COMMUNICATIONS**
MOBILITÄT IN DER PEER-TO-PEER-KOMMUNIKATION
MOBILITÉ DANS LES COMMUNICATIONS DE PAIR À PAIR

(30) Priority: 26.02.2010 US 308727 P
(43) Date of publication of application: 02.01.2013
(73) Proprietor: InterDigital Patent Holdings, Inc., Wilmington, DE 19809 (US)
(72) Inventor: LU, Guang, Dollard-des-Ormeaux, Québec H9B 1J4 (CA); RAHMAN, Shamim, A., Cote St. Luc, Québec H4V 1B8 (CA); ZUNIGA, Juan Carlos, Montreal, Québec H4L 3J4 (CA); DOKEN, Serhad, Chester Springs, PA 19425 (US)
(74) Representative: Gunnarsson, Ola Christoffer
(86) International application number: PCT/US2011/026280
(87) International publication number: WO 2011/106670

(56) References cited:
- WO-A2-02/15035
- WO-A2-2007/030723
- KR-A- 20090 060 703

## Description

**BACKGROUND**

The REsource LOcation Discovery (RELOAD) protocol allows creation of an overlay P2P network on top of the Internet. RELOAD facilitates applications such as SIP-based applications, Voice over IP (VoIP) application, and streaming applications. One problem in RELOAD is supporting the mobility of peer nodes. Currently, "Host Identity Protocol" (HIP) is identified as a candidate to support limited mobility. Other protocols, such as Mobile IP (MIP) and Proxy Mobile IP (PMIP), have not been discussed in RELOAD standards.

MIP allows transmit/receive units (TRUs) to keep the same Internet Protocol (IP) address while roaming between different IP networks, thereby providing IP level mobility. However, using MIP for peer-to-peer (P2P) communications may have several issues. The first issue MIP may have is that even though MIP may mitigate service interruption, there is still a period when the mobile detaches from the old network, before it obtains a new CoA, that the traffic cannot reach the mobile node. This may cause high packet loss for P2P applications. Depending on the application, some may terminate ungracefully. The second issue MIP may have is that since MIP hides the change of a mobile's actual IP address, it can cause sub-optimal peer selection. For example, the peer may not be aware that the mobile node is in the peer's visited network and the mobile node may cause long latency and extra hops.

PMIP may also be used in P2P communication systems. PMIP is a network-based mobility technology. It allows a TRU to keep the same IP address while roaming between different networks (as in MIP), but the TRU is not aware of IP mobility functionality performed by the network. This nature of PMIP is problematic to P2P communications because IP mobility is totally transparent to the P2P overlay network. A peer node is not aware of its mobility and cannot inform a P2P tracker or its peers of IP level mobility. Document KR 2009 0060703 (KOREA ELECTRONICS TELECOMM [KR]) (2009-06-15) discloses a method of mobility in peer to peer communication.

**SUMMARY**

A method for mobility in peer to peer communication for a first peer, comprising registering a first Internet Protocol (IP) address and IP mobility method of the first peer with a P2P tracker, establishing a peer to peer (P2P) connection with a second peer, changing locations and obtaining a second IP address, registering the second IP address of the first peer with the P2P tracker via IP mobility method, and transmitting information to the second peer in the P2P communication.

**BRIEF DESCRIPTION OF THE DRAWINGS**

A more detailed understanding may be had from the following description, given by way of example in conjunction with the accompanying drawings wherein:

FIG. 1A is a system diagram of an example communications system in which one or more disclosed embodiments may be implemented;

FIG. 1B is a system diagram of an example wireless transmit/receive unit (WTRU) that may be used within the communications system illustrated in FIG. 1A;

FIG. 1C is a system diagram of an example radio access network and an example core network that may be used within the communications system illustrated in FIG. 1A;

FIG. 1D is an example method flow diagram of mobility in a P2P communication network;

FIG. 2 is an example P2P communication network;

FIG. 3 is an example P2P communication network wherein a peer may move between different access networks;

FIG. 4 is an example P2P communication network wherein Mobile Internet Protocol (MIP) may be used;

FIG. 5 is an example P2P communication network wherein a peer may transmit mobility prediction information;

FIG. 6 is an example P2P communication network wherein MIP may be used and wherein a peer may communicate mobility-related information to other peers, nodes, and/or P2P mobility tracking servers;

FIG. 7 is an example P2P communication network wherein Proxy MIP (PMIP) may be used; and

FIG. 8 is an example P2P communication network wherein RELOAD may be used and wherein mobility-related information may be communicated.

**DETAILED DESCRIPTION**

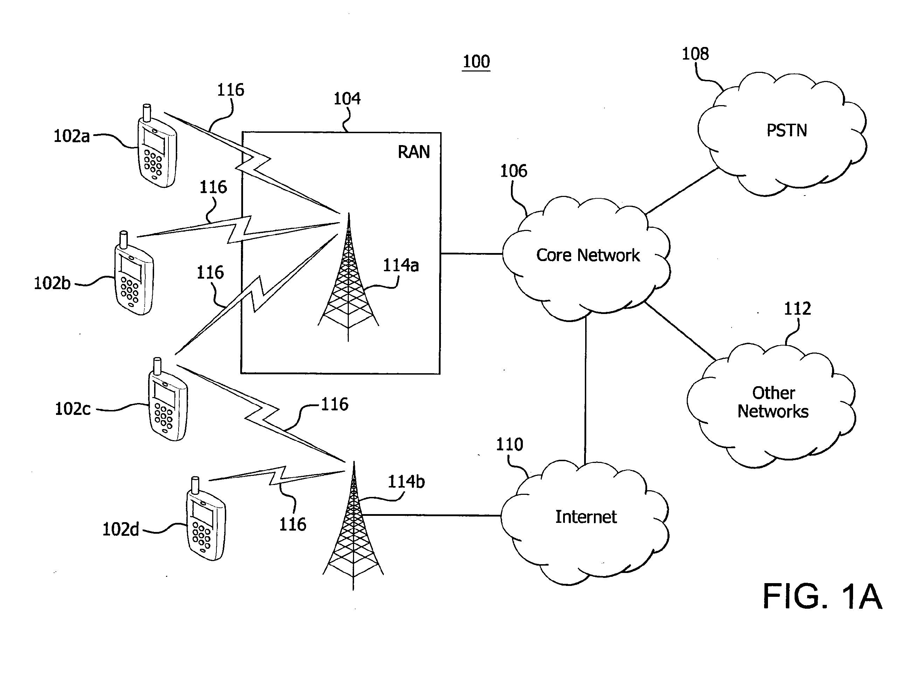

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (use), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

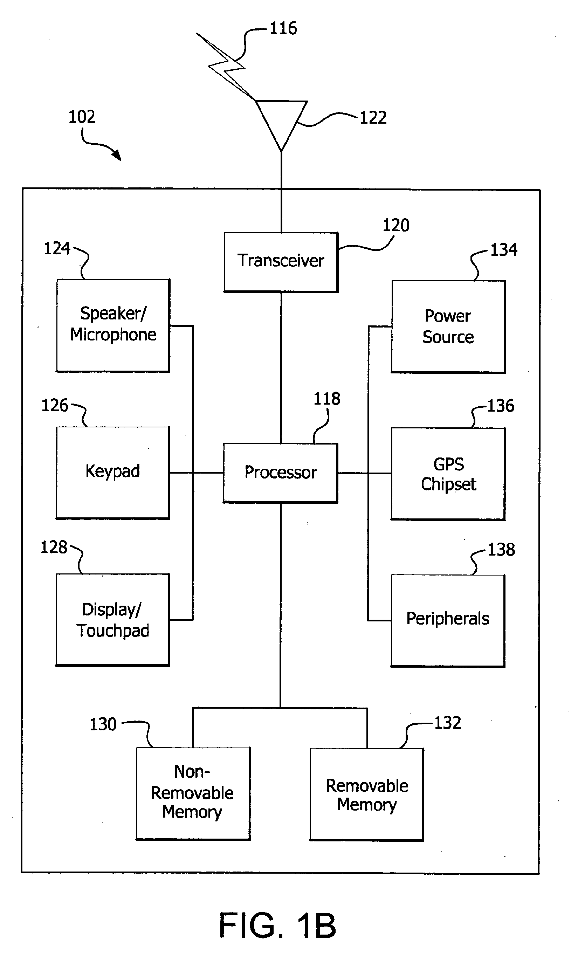

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 106, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 106 and/or the removable memory 132. The non-removable memory 106 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

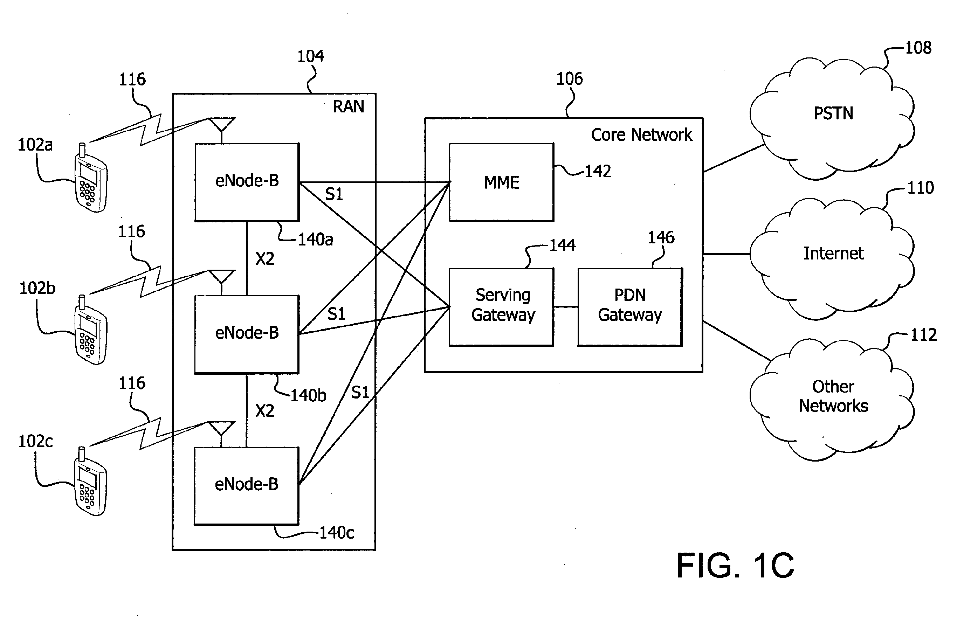

FIG. 1C is a system diagram of the RAN 104 and the core network 106 according to an embodiment. As noted above, the RAN 104 may employ an E-UTRA radio technology to communicate with the WTRUs 102a, 102b, 102c over the air interface 116. The RAN 104 may also be in communication with the core network 106.

The RAN 104 may include eNode-Bs 140a, 140b, 140c, though it will be appreciated that the RAN 104 may include any number of eNode-Bs while remaining consistent with an embodiment. The eNode-Bs 140a, 140b, 140c may each include one or more transceivers for communicating with the WTRUs 102a, 102b, 102c over the air interface 116. In one embodiment, the eNode-Bs 140a, 140b, 140c may implement MIMO technology. Thus, the eNode-B 140a, for example, may use multiple antennas to transmit wireless signals to, and receive wireless signals from, the WTRU 102a.

Each of the eNode-Bs 140a, 140b, 140c may be associated with a particular cell (not shown) and may be configured to handle radio resource management decisions, handover decisions, scheduling of users in the uplink and/or downlink, and the like. As shown in FIG. 1C, the eNode-Bs 140a, 140b, 140c may communicate with one another over an X2 interface.

The core network 106 shown in FIG. 1C may include a mobility management gateway (MME) 142, a serving gateway 144, and a packet data network (PDN) gateway 146. While each of the foregoing elements are depicted as part of the core network 106, it will be appreciated that any one of these elements may be owned and/or operated by an entity other than the core network operator.

The MME 142 may be connected to each of the eNode-Bs 142a, 142b, 142c in the RAN 104 via an S1 interface and may serve as a control node. For example, the MME 142 may be responsible for authenticating users of the WTRUs 102a, 102b, 102c, bearer activation/deactivation, selecting a particular serving gateway during an initial attach of the WTRUs 102a, 102b, 102c, and the like. The MME 142 may also provide a control plane function for switching between the RAN 104 and other RANs (not shown) that employ other radio technologies, such as GSM or WCDMA.

The serving gateway 144 may be connected to each of the eNode Bs 140a, 140b, 140c in the RAN 104 via the S1 interface. The serving gateway 144 may generally route and forward user data packets to/from the WTRUs 102a, 102b, 102c. The serving gateway 144 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 144 may also be connected to the PDN gateway 146, which may provide the WTRUs 102a, 102b, 102c with access to packet-switched networks, such as the Internet 110, to facilitate communications between the WTRUs 102a, 102b, 102c and IP-enabled devices.

The core network 106 may facilitate communications with other networks. For example, the core network 106 may provide the WTRUs 102a, 102b, 102c with access to circuit-switched networks, such as the PSTN 108, to facilitate communications between the WTRUs 102a, 102b, 102c and traditional land-line communications devices. For example, the core network 106 may include, or may communicate with, an IP gateway (e.g., an IP multimedia subsystem (IMS) server) that serves as an interface between the core network 106 and the PSTN 108. In addition, the core network 106 may provide the WTRUs 102a, 102b, 102c with access to the networks 112, which may include other wired or wireless networks that are owned and/or operated by other service providers.

Disclosed herein are approaches to mobility for use in the context of peer-to-peer (P2P) communications and other contexts. The disclosed approaches, as described herein, may relate to link layer mobility, simple Internet Protocol (IP) changes, Mobile IP (MIP), Proxy Mobile IP (P-MIP), Session Initiation Protocol (SIP), Virtual Private Network (VPN) technology, Hyper Text Transfer Protocol (HTTP), multi-homing, flow mobility, and/or Resource Location and Discovery (RELOAD) technology

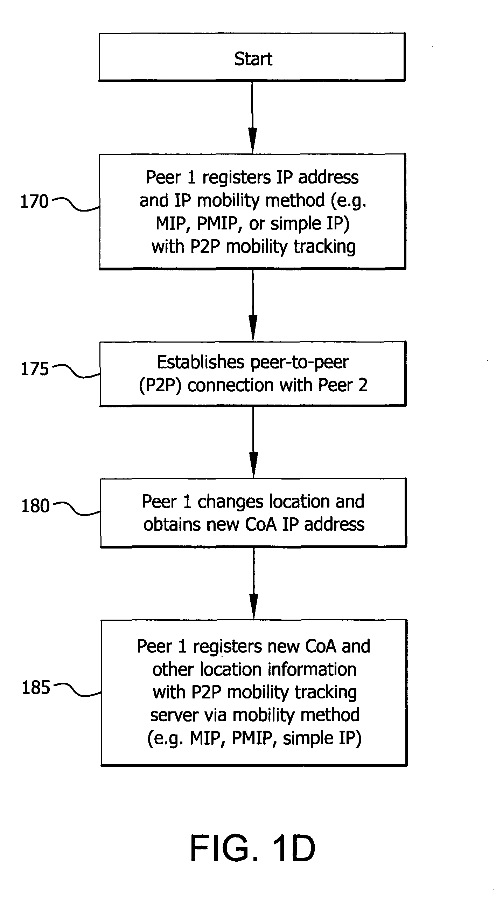

Figure 1D is an example method flow diagram of mobility in a P2P communication network. Peer 1 may register its IP address and IP mobility method with a P2P tracker (170). For example, an IP mobility method may be MIP, PMIP, or simple IP. Peer 1 may then establish a P2P connection with peer 2 (175). Peer 1 may change locations and obtain a new CoA IP address (180). Peer 1 may then register its CoA and other location information with the P2P tracker via MIP, PMIP, or simple IP.

A P2P network or application may include a topology for content delivery. A P2P network may include a P2P tracker and peers or only peers (e.g. distributed hash table (DHT) type of distributed system). Peers in a P2P network may send keep-alive messages to detect a loss of connectivity.

A P2P tracker may transmit a peer list and/or swarm ID to peers. A peer may receive a list of peer nodes from the P2P mobility tracking server. A peer may transmit information to the P2P mobility tracking server, such as the swarms they belong to, content availability, and/or streaming status. A P2P tracker may exist in a fixed network in an operator's network, outside of an operator's network, or as an element in the public Internet.

A peer may transmit information to other peers, such as availability of content or other data at the peer. A peer may identify other peers to request desired content. A peer may request content from other peers. Some current approaches to P2P communication do not address the mobility of peers, causing performance degradation of P2P streaming sessions and/or the loss of P2P connection.

Geo-targeting is a technique used to determine the physical location, or geolocation, of a transmit/receive unit (TRU). Geolocation may be based on geographical information and/or other personal information provided by the peer or other peers. A geolocation may be determined based on, for example, civic location, Global Position System (GPS) coordinates or IP address. When an IP address is used to determine a geolocation for a peer, this may be performed by using regional Internet registries that include IP address geographical-related data.

Depending on a peer's geolocation, different regulation and policy rules may apply. For example, some content may not be distributed to peers in certain locations or may only be distributed to peers in specific locations. Policies may apply differently to different media, such as video, audio, closed-captioning, and whole content. Content distribution tools, such as media streaming clients may apply to certain rules or policies to content distribution. Most geo-targeting techniques do not take IP mobility into account, resulting in un-enforceable policies.

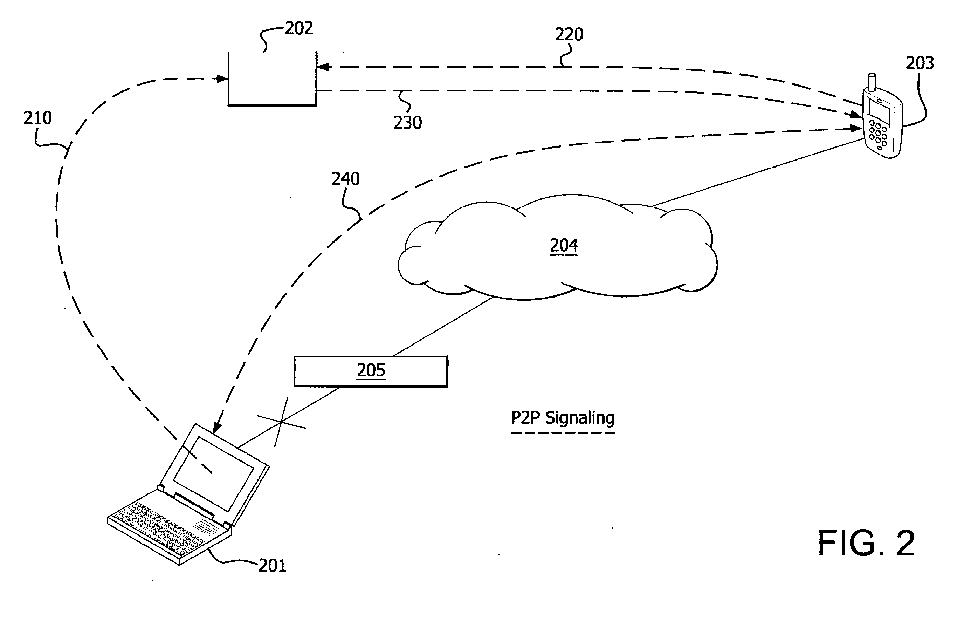

Figure 2 illustrates an example P2P communication system. In Figure 2 a peer may experience link layer performance degradation. Peer 1 (201) is physically connected to the Internet (204) via access router 1 (205). Peer 2 (203) is also physically connected to the Internet (204). Peer 1 (201), with IP address 1, may register its IP address with a P2P tracker (202) in step 210. The P2P tracker (202) may then receive a query for a peer list from peer 2 (203) in step 220. The P2P tracker (202) may then transmit a peer list to peer 2 (203) including the IP address for peer 1 (201) in step 230. Peer-to-Peer (P2P) communication may then be established between peer 1 (201) and peer 2 (203) in step 240. If the link layer connection to the Internet (204) degrades for peer 1 (201), the P2P connection between peer 1 (201) and peer 2 (203) also degrades or may be lost.

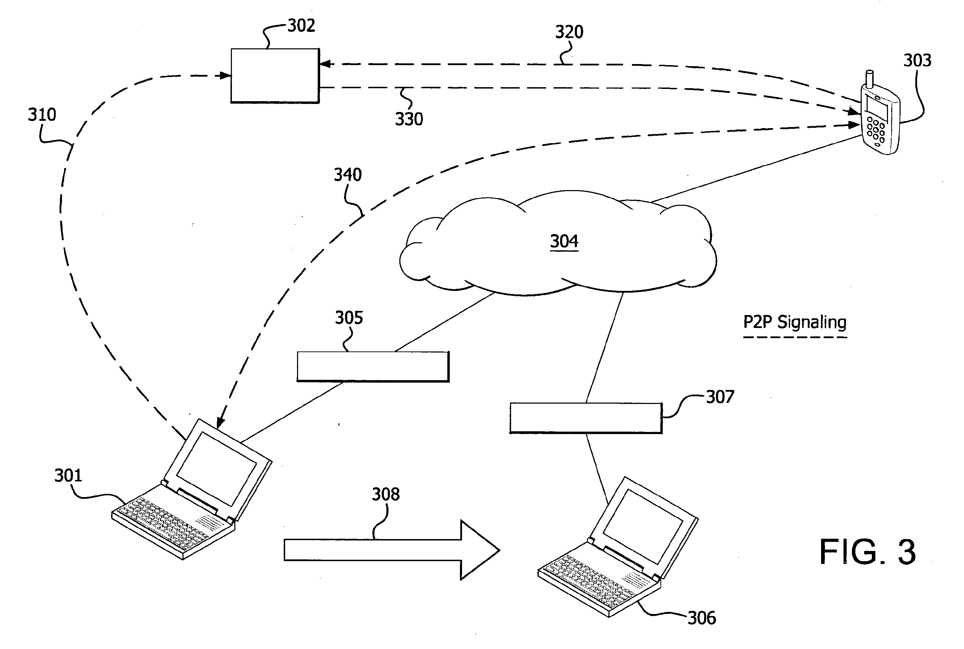

Figure 3 illustrates an example P2P communication system wherein a peer may move between different access networks. Peer 1 (301) may be physically connected to the Internet (304) via access router 1 (305). Peer 2 (303) may also be physically connected to the Internet (304). Peer 1 (301), with IP address 1, may register its IP address with a P2P tracker (302) in step 310. The P2P tracker (302) may then receive a query for a peer list from peer 2 (303) in step 320. The P2P tracker (202) may then transmit a peer list to peer 2 (303) including the IP address for peer 1 (301) in step 330. Peer-to-Peer (P2P) communication may then be established between peer 1 (301) and peer 2 (303) in step 340.

Peer 1 (301) may detach and move (308), obtaining a second IP address (306). When peer 1 (301), with IP address 1, moves and changes its IP address its P2P connection may get lost. Peer 1 (306), with IP address 2, is physically connected to the Internet (304) via access router 2 (307). Peer 1 (306), with IP address 2, registers its new IP address with P2P tracker (302). After peer 1 (306), with IP address 2, registers it's new IP address, connection may resume with peer 2 (303).

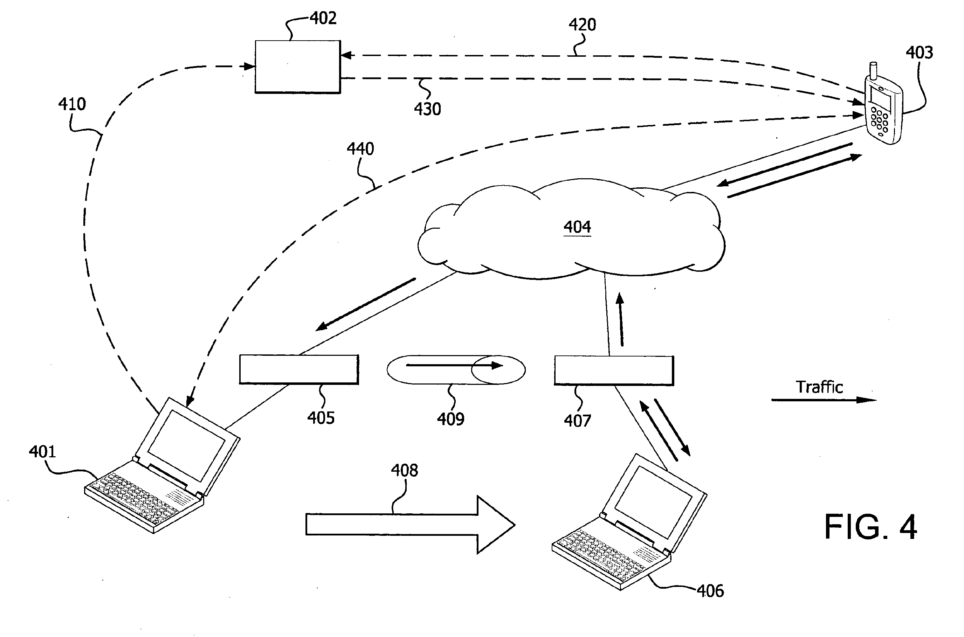

Figure 4 illustrates an P2P communication system wherein Mobile Internet Protocol (MIP) may be used. Peer 1 (401) may be physically connected to the Internet (404) via home agent (405). Peer 2 (403) may also be physically connected to the Internet (404). Peer 1 (401), with IP address 1, may register its IP address with a P2P tracker (402) in step 410. The P2P tracker (402) may then receive a query for a peer list from peer 2 (403) in step 420. The P2P tracker (402) may then transmit a peer list to peer 2 (403) including the IP address for peer 1 (401) in step 430. Peer-to-Peer (P2P) communication may then be established between peer 1 (401) and peer 2 (403) in step 440.

Peer 1 (401) may then detach. When peer 1 (401) moves there may be a high packet loss before peer 1 (401) obtains a new care of address (CoA) and the connection may be lost. When Peer 1 (401) moves (408) to IP address 2, MIP tunneling (409) may occur. Peer 1 (406) may now be physically connected to the Internet (404) via foreign agent (407). Peer 1 (406), with IP address 2, may obtain a new (COA). Peer 1 (406), with IP address 2, and peer 2 (403) may resume P2P connection.

When a TRU registers with a P2P mobility tracking server, it may send one or more messages to the P2P tracker related to the TRU's capabilities and/or mobility status. For example, a TRU may send a peer status report to a P2P tracker related to whether the TRU supports mobility protocols, whether it is a mobile device or not, whether it is a WTRU, what types of communications interfaces (wired and/or wireless) the TRU has, the TRU's location, media encoding, decoding, or transcoding capabilities, battery level for the TRU, computing power, storage space, uplink and downlink bandwidth availability and/or what media content or other data the TRU has that is available for sharing with other peers. Alternatively or additionally, a TRU may send this information to peer TRUs in one or more messages.

A P2P tracker may maintain statistics about a peer's mobility status. For example, the P2P tracker may store data that indicates how often and/or when the peer changes IP addresses. The P2P tracker may use this information to prioritize a peer list to facilitate peer selection. A first peer may send a message to a P2P tracker that requests a list of peers from the P2P mobility tracking server. The P2P tracker may determine the contents of a peer list to return to the first peer based on the mobility status information. The P2P tracker may then send a response message to the first peer that includes the peer list.

When a peer changes point of attachment, the peer may inform a P2P tracker and/or other peers of its movement. Changing a point of attachment may include, for example, changing an access network and/or changing a Layer Two (L2) address. Alternatively or additionally, when a peer changes its Layer Three (L3) connection, the peer may inform a P2P tracker and/or other peers of the change. Changing a L3 connection may include, for example, changing an IP address,

When a peer detects a change in its uplink or downlink bandwidth, it may send one or more messages to a P2P tracker and/or peers to inform them of the changes(s). Alternatively or additionally, when a peer detects latency during a P2P streaming session after a mobility change, it may send one or more messages to a P2P tracker and/or peers informing them of the latency.

A peer may also send information related to movement predictions to a P2P tracker and/or peers. This may be used by the P2P tracker and/or peers to track the peer's current status of connection. A movement prediction may be related to, for example, a user's intention to move and/or change access technologies. Alternatively or additionally, a movement prediction may be based on an indication of a likelihood of movement based on Quality of Service (QoS) conditions. For example, a L2 interface in a TRU may provide information that indicates that the TRU is losing link level connectivity.

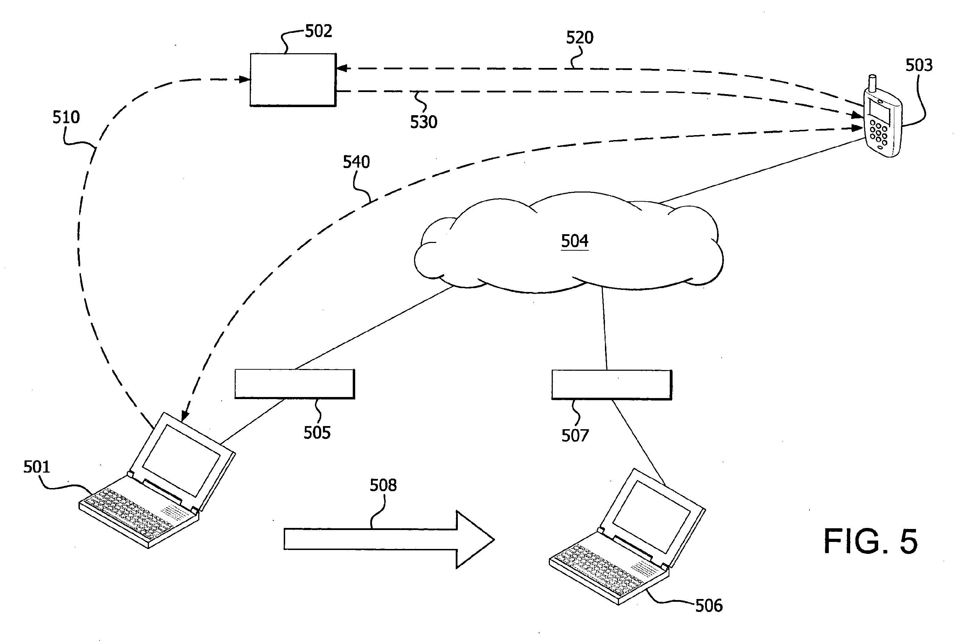

Figure 5 illustrates an example P2P communication system wherein a peer may transmit mobility prediction information. Peer 1 (501) may be physically connected to the Internet (504) via access router 1 (505). Peer 2 (503) may also be physically connected to the Internet (504). Peer 1 (501), with IP address 1, may register its peer type, IP address, and all available IP addresses with a P2P tracker (502) in step 510. The P2P tracker (502) may then receive a query for a peer list from peer 2 (503) in step 520. The P2P tracker (502) may then transmit a peer list to peer 2 (503) including the IP address for peer 1 (501) in step 530. P2P communication may then be established between peer 1 (501) and peer 2 (503) in step 540.

Peer 1 (501) may then detect mobility and send a prediction to connected peers, peer 2 (503) in this case, or the P2P tracker (502). When peer 1 (501), with IP address 1, moves (508) and changes its IP address its P2P connection may get lost. Peer 1 (506), with IP address 2, is physically connected to the Internet (504) via access router 2 (507). Peer 1, with IP address 2 (506), may update its new IP address with the P2P tracker (502). Peer 1 (506), with IP address 2, and peer 2 (503) may resume a connection after peer 1 (506), with IP address 2, updates its new IP address.

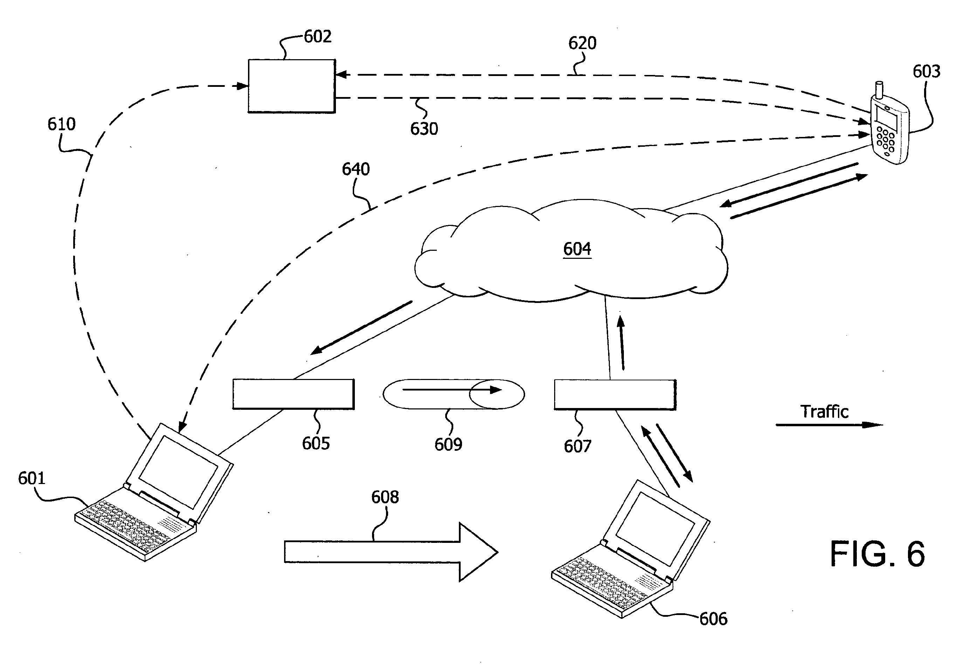

Figure 6 illustrates an example P2P communication system wherein MIP may be used and wherein a peer may communicate mobility-related information to other peers and/or a P2P mobility tracking server. Peer 1 (601) may be physically connected to the Internet (604) via access router 1 (605). Peer 2 (603) may also be physically connected to the Internet (604). Peer 1 (601), with IP address 1, may register its IP address and IP mobility method (e.g. MIP, PMIP, or simple IP) with a P2P tracker (602) in step 610. The P2P tracker (602) may then receive a query for a peer list from peer 2 (603) in step 620. The P2P tracker (602) may then transmit a peer list to peer 2 (603) including the IP address for peer 1 (601) in step 630. P2P communication may then be established between peer 1 (601) and peer 2 (603) in step 640.

Peer 1 (601) may then transmit a mobility indication to P2P tracker (602) and detach. When Peer 1 (601) moves (608) to IP address 2, MIP tunneling (609) may occur. Peer 1 (606) may obtain a new CoA, IP address 2. Peer 1 (606), with IP address 2, may transmit its CoA and other location information to the P2P tracker (602). Peer 1 (606), with IP address 2 may be physically connected to the Internet (604) via foreign agent (607). Peer 1 (606), with IP address 2, may send its new CoA information related to its location, and/or other information related to its new point of attachment and/or access network to P2P tracker (602). Peer 1 (606), with IP address 2, and peer 2 (603) may continue the P2P connection while peer 1 (606), with IP address 2, updates its new IP address.

For PMIP, a mobile access gateway (MAG) may inform the mobile node that an IP address change occurs upon the binding update and the mobile may then inform the peers or P2P mobility tracking server. If there is an interface between a MAG and the P2P mobility tracking server, the MAG may pass the IP mobility information to the P2P tracker via the interface. If there is an interface between a local mobility anchor (LMA) and the P2P mobility tracking server, the LMA may pass the IP mobility information to the P2P mobility tracking server. The P2P tracker may multicast such information to the relevant peers. This may also apply to PMIPv6 and Dual Stack Mobile IP (DSMIP)v6.

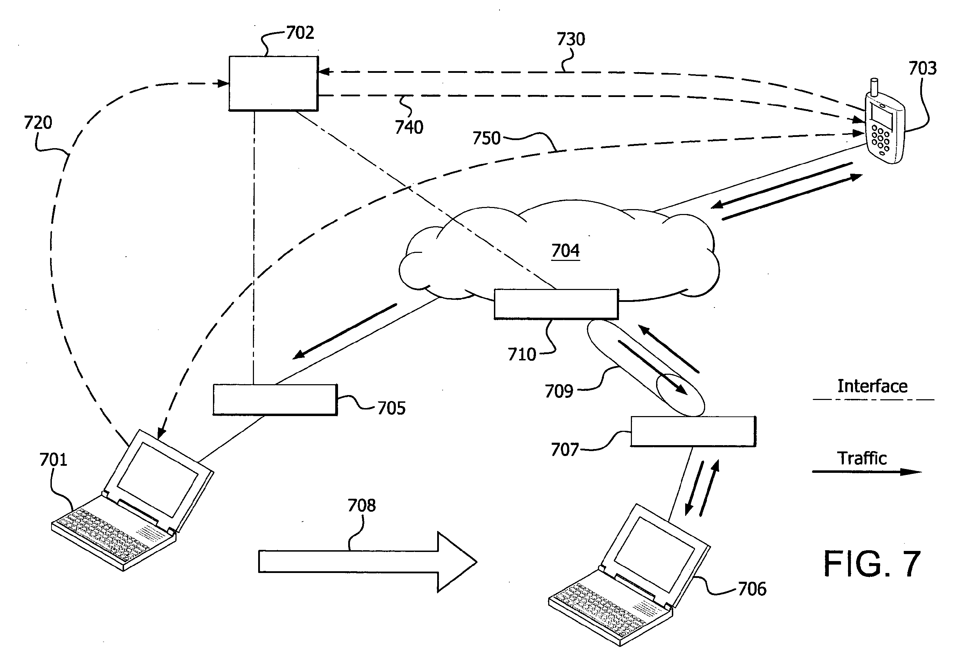

Figure 7 illustrates an example P2P communication system wherein Proxy Mobile Internet Protocol (P-MIP) may be used. Peer 1 (710) may be physically connected to the Internet (704) via MAG 1 (705) and the LMA(HA) (710). Peer 2 (703) may also be physically connected to the Internet (704). Peer 1 (701), with IP address 1, may register its IP address and IP mobility method (e.g. MIP, PMIP, or simple IP) with a P2P tracker (702) in step 720. The P2P tracker (702) may then receive a query for a peer list from peer 2 (703) in step 730. The P2P tracker may then transmit a peer list to peer 2 (703) including the IP address for peer 1 (701) in step 740. P2P communication may then be established between peer (701) and peer 2 (703) in step 750.

Peer 1 (701) transmits a mobility indication to P2P tracker (702) and detaches. When Peer 1 (701) moves (708) to IP address 2, PMIP tunneling (709) may occur. Peer 1 (706) may obtain a new CoA, IP address 2. Peer 1 (706), with IP address 2, may transmit its CoA and other location information to the P2P tracker (702). Peer 1 (706), with IP address 2, may be physically connected to the Internet (704) via MAG 2 (707) and LMA(HA) (710). Peer 1 (706), with IP address 2, may communicate P2P data with peer 2 (703) via a PMIP tunnel (709) between MAG 2 (707) and the LMA(HA) (710). Peer 1 (706), with IP address 2, may send its new CoA, information related to its location, and/or other information related to its new point of attachment and/or access network to P2P tracker (702). Alternatively or additionally, peer 1 (706), with IP address 2, may send this information to MAG 2 (707) and/or LMA (HA) (710), and the LMA (HA) (710) may communicate the information to the P2P tracker (702). Peer 1 (706), with IP address 2, and peer 2 (703) may continue the P2P connection while peer 1 (706), with IP address 2, updates its new IP address.

Alternatively or additionally, the first peer may use session initiation protocol (SIP) to communicate with a P2P tracker in a P2P network. If a policy is applied by a transmitting peer, an in-bound or out-of-bound signal may be sent to the peer. If policy is applied by the P2P mobility tracking server, a SIP re-invite message may be used. Further, SIP extensions may be used for this purpose.

Peers may communicate P2P data via a virtual private network (VPN) that uses network address translation (NAT), and/or may use VPN/NAT-based technology for mobility management. In such case, a receiving peer may communicate its local IP address as well as one or more external IP address(es) associated with the VPN to a transmitting peer.

Peers may communicate P2P data using Hyper Text Transfer Protocol (HTTP). An HTTP policy may be applied at the beginning of an HTTP session. In the case of a large download, if an IP address of the peer changes, the HTTP policy should be re-applied and/or updated. This may be performed if session details (such as cookies) are kept, or are erased. An IP address of a peer may change during a download based on the use of a different Transmit Control Protocol (TCP) socket (Related to an IP address/port) for each chunk in the download. HTTP may also be used to transmit location information between peers. For example, HTTP-Enabled Location Discovery (HELD) may be used to communicate data between peers. HELD may be used, for example, in the context of an HTTP streaming session.

Peer 1 may communicate P2P data while using multi-homing and/or flow mobility technologies. A peer may transmit to other peers all of the IP addresses it has available. This may be performed, for example, when a peer is using multi-homing or Multipath TCP (MPTCP) technology. A policy used in this context may be inclusive of all IP addresses available to a peer, or may apply only to a subset of IP addresses available to the peer. A policy may also be applicable to MAC addresses. When a policy is applicable to MAC addresses, the communication of data may be restricted/allowed based on link type.

A number of technologies may be used at a peer to detect IP mobility and/or location changes. In addition or as an alternative to the approaches described above, a peer may use rout-trace, ping, and/or IP neighbor technologies to detect IP mobility and/or location changes.

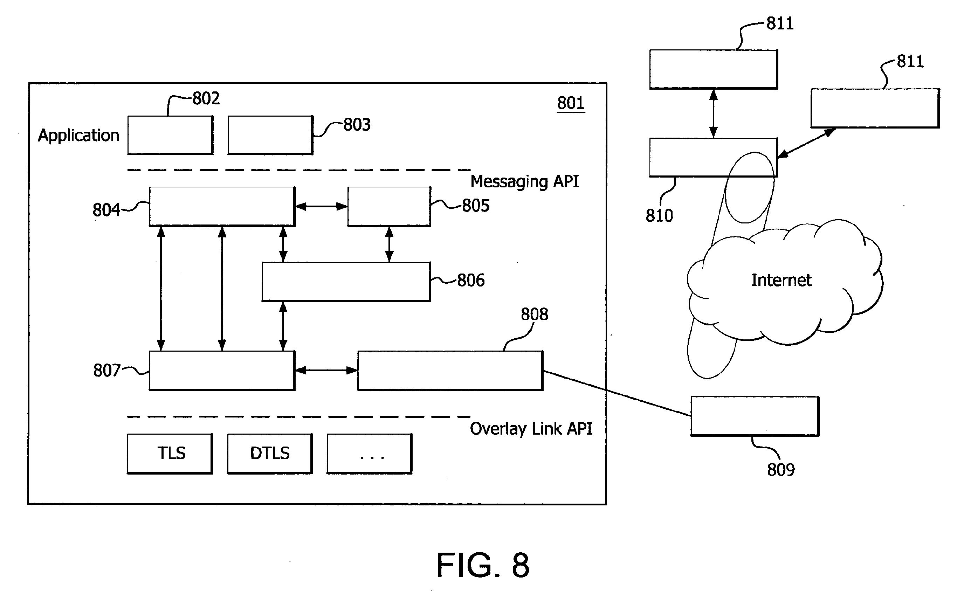

Figure 8 illustrates an example P2P communication system wherein RELOAD may be used and wherein mobility-related information may be communicated. Figure 8 shows a first TRU (801) that may be a peer or a P2P mobility tracking server. The peer/P2P tracker (801) may include Peer to Peer Streaming Protocol (PPSP) module (802), a SIP module (803), a message transport module (804), a storage module (805), a topology plug-in module (806), a forwarding and link management module (807), and a mobility client (808). Mobility client (808) may implement functionally related to MIPv6, MIPv4, PMIPv4, PMIPv6, Dynamic Host Control Protocol (DHCP) for IPv4, and/or IPv6 Stateless Address Autoconfiguration, and/or other technologies or protocols. DCHP functionality implemented by the mobility client (808) may relate to nomadic scenarios.

The mobility client (808) in the peer/P2P tracker (801) may communicate peer mobility status updates and/or other information directly or indirectly with the forwarding and link management module (807), the topology plug-in module (806), and/or the message transport module (804). The mobility client (808) may communicate information (directly or indirectly) to the those other modules related to the peer/P2P mobility tracking server's (801) own IP address, and/or related to IP addresses of other peers and/or P2P mobility tracking servers (811). The mobility client (808) may communicate this information, for example, when its IP address or one of the IP addresses of interest changes. The mobility client (808) may communicate with a foreign agent (809), while another peer and/or P2P tracker (811) is connected to a home agent (810).

Application-level modules (such as the PPSP streaming module (802) and the SIP module (803)) may receive link status and/or mobility-related information from other modules in the peer/P2P tracker (801), such as RELOAD modules in the peer/P2P tracker (801). For example, this information may be communicated to the application-level modules by the forwarding and link management module and/or the message transport module. This information may include, for example, information related to the frequency of changes of IP address of the peer/P2P tracker itself, or of other peers/P2P mobility tracking servers in the P2P network. This information may also include information related to link quality for the peer/P2P tracker or for other peers/P2P mobility tracking servers in the P2P network.

A geo-targeting policy list may be applied throughout a P2P session, regardless of IP mobility of peers involved in the session. A receiving and/or cooperative receive peer, for example, may enforce a geo-targeting policy. A receiving peer may receive status reports from a transmitting peer. The status reports may be sent by a transmitting peer periodically and/or based on one or more triggers established by the transmitting peer.

The application of a geo-targeting policy list may be performed using keep alive messages and/or geolocation status request message. These messages may be communicated, for example, from a transmitting peer to a receiving peer or from a P2P tracker to a receiving peer. These messages (and/or other messages that are sent in response to these messages) may include additional information such as link status information.

If a P2P trackers aware of movement by a receiving peer, it may send a report to a transmitting peer that is transmitting to the receiving peer. The report may indicate that the receiving peer is moving. Alternatively or additionally, peers may be aware of geolocation data for other peers with which they are in communication with, and may use the data for MIP route optimization.

The application of a geo-targeting policy list may be performed in P2P networks wherein there are rules related to streaming source locations, or in networks which include no rules related to streaming source locations.

EMBODIMENTS
1. A method of mobility in peer to peer communication for a first peer, the method comprising:
   registering a first Internet Protocol (IP) address and IP mobility method of the first peer with a P2P tracker.
2. The method as in embodiment 1, further comprising:
   transmitting a peer status report to the P2P tracker.
3. The method as in any one of embodiments 1-2, further comprising:
   establishing a peer to peer (P2P) connection with a second peer.
4. The method as in any one of embodiments 1-3, further comprising:
   changing locations and obtaining a second IP address.
5. The method as in any one of embodiments 1-4, further comprising:
   registering the second IP address of the first peer with the P2P tracker via IP mobility method.
6. The method an in any one of embodiments 1-5, further comprising:
   transmitting information to the second peer in the P2P communication.
7. The method as in any one of embodiments 2-6 wherein the peer status report includes a battery level of the first peer.
8. The method as in any one of embodiments 2-6 wherein the peer status report includes a change in IP address of the first peer.
9. The method as in any one of embodiments 2-6 wherein the peer status report includes an available bandwidth of the first peer.
10. The method as in embodiment 9 wherein the bandwidth is an uplink bandwidth.
11. The method as in embodiment 9 wherein the bandwidth is a downlink bandwidth.
12. The method as in any one of embodiments 1-11 wherein the IP mobility method is selected from the group consisting of simple IP, Mobile IP (MIP), and Proxy Mobile IP (PMIP).
13. A method of mobility in peer to peer communication for a P2P tracker, the method comprising:
   receiving and storing a first Internet Protocol (IP) address and IP mobility method from a first peer.
14. The method as in embodiment 13, further comprising:
   receiving a peer status report from the fist peer.
15. The method as in any one of embodiments 13-14, further comprising:
   receiving a request for a peer list from a second peer.
16. The method as in any one of embodiments 13-15, further comprising:
   transmitting the peer list to the second peer.
17. The method as in any one of embodiments 13-16, further comprising:
   receiving a second IP address from the first peer via the IP mobility method.
18. The method as in any one of embodiments 14-17 wherein the peer status report includes a battery level of the first peer.
19. The method as in any one of embodiments 14-17 wherein the peer status report includes a change in IP address of the first peer.
20. The method as in any one of embodiments 14-17 wherein the peer status report includes an available bandwidth of the first peer.
21. The method as in embodiment 20 wherein the bandwidth is an uplink bandwidth.
22. The method as in embodiment 20 wherein the bandwidth is a downlink bandwidth.
23. The method as in any one of embodiments 13-22 wherein the IP mobility method is selected from the group consisting of simple IP, Mobile IP (MIP), or Proxy Mobile IP (PMIP).

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method of mobility in peer to peer communication for a first peer, the method comprising:
registering a first Internet Protocol (IP) address and IP mobility method of the first peer with a P2P tracker;
transmitting a peer status report to the P2P tracker;
establishing a peer to peer (P2P) connection with a second peer;
changing locations and obtaining a second IP address;
registering the second IP address of the first peer with the P2P tracker via IP mobility method; and
transmitting information to the second peer in the P2P communication.

2. The method of claim 1, wherein the peer status report includes a battery level of the first peer.

3. The method of claim 1, wherein the peer status report includes a change in IP address of the first peer.

4. The method of claim 1, wherein the peer status report includes an available bandwidth of the first peer.

5. The method of claim 4, wherein the bandwidth is an uplink bandwidth.

6. The method of claim 4, wherein the bandwidth is a downlink bandwidth.

7. The method of claim 1, wherein the IP mobility method is selected from the group consisting of simple IP, Mobile IP (MIP), and Proxy Mobile IP (PMIP).

8. A method of mobility in peer to peer communication for a P2P tracker, the method comprising:
receiving and storing a first Internet Protocol (IP) address and IP mobility method from a first peer;
receiving a peer status report from the fist peer;
receiving a request for a peer list from a second peer;
transmitting the peer list to the second peer; and
receiving a second IP address from the first peer via the IP mobility method.

9. The method of claim 8, wherein the peer status report includes a battery level of the first peer.

10. The method of claim 8, wherein the peer status report includes a change in IP address of the first peer.

11. The method of claim 8, wherein the peer status report includes an available bandwidth of the first peer.

12. The method of claim 11, wherein the bandwidth is an uplink bandwidth.

13. The method of claim 11, wherein the bandwidth is a downlink bandwidth.

14. The method of claim 8, wherein the IP mobility method is selected from the group consisting of simple IP, Mobile IP (MIP), and Proxy Mobile IP (PMIP).

## Patentansprüche

1. Verfahren für die Mobilität in der Peer-zu-Peer-Kommunikation für einen ersten Peer, wobei das Verfahren aufweist:
Registrieren einer ersten Internetprotokoll- (IP-) Adresse und eines IP-Mobilitätsverfahrens des ersten Peer bei einem Peer-zu-Peer(P2P)-Tracker;
Senden einer Peer-Statusmeldung an den P2P-Tracker;
Aufbauen einer Peer-zu-Peer-(P2P-)Verbindung mit einem zweiten Peer;
Ändern eines Standorts und Erhalten einer zweiten IP-Adresse;
Registrieren der zweiten IP-Adresse des ersten Peer bei dem P2P-Tracker unter Verwendung des IP-Mobilitätsverfahrens; und
Senden von Informationen an den zweiten Peer in der P2P-Kommunikation.

2. Verfahren nach Anspruch 1, wobei die Peer-Statusmeldung einen Batteriepegel des ersten Peer umfasst.

3. Verfahren nach Anspruch 1, wobei die Peer-Statusmeldung eine Änderung der IP-Adresse des ersten Peer umfasst.

4. Verfahren nach Anspruch 1, wobei die Peer-Statusmeldung eine verfügbare Bandbreite des ersten Peer umfasst.

5. Verfahren nach Anspruch 4, wobei die Bandbreite eine Uplink-Bandbreite ist.

6. Verfahren nach Anspruch 4, wobei die Bandbreite eine Downlink-Bandbreite ist.

7. Verfahren nach Anspruch 1, wobei das IP-Mobilitätsverfahren aus der Gruppe ausgewählt wird, die aus Simple IP, mobilem IP (MIP) und Proxy Mobile IP (PIMP) besteht.

8. Verfahren für die Mobilität in der Peer-zu-Peer-Kommunikation für einen P2P-Tracker, wobei das Verfahren aufweist:
Empfangen und Speichern einer ersten Internetprotokoll-(IP-)Adresse und eines IP-Mobilitätsverfahrens von einem ersten Peer;
Empfangen einer Peer-Statusmeldung von dem ersten Peer;
Empfangen einer Anforderung einer Peer-Liste von einem zweiten Peer;
Senden der Peer-Liste an den zweiten Peer; und
Empfangen einer zweiten IP-Adresse von dem ersten Peer über das IP-Mobilitätsverfahren.

9. Verfahren nach Anspruch 8, wobei die Peer-Statusmeldung einen Batteriepegel des ersten Peer umfasst.

10. Verfahren nach Anspruch 8, wobei die Peer-Statusmeldung eine Änderung der IP-Adresse des ersten Peer umfasst.

11. Verfahren nach Anspruch 8, wobei die Peer-Statusmeldung eine verfügbare Bandbreite des ersten Peer umfasst.

12. Verfahren nach Anspruch 11, wobei die Bandbreite eine Uplink-Bandbreite ist.

13. Verfahren nach Anspruch 11, wobei die Bandbreite eine Downlink-Bandbreite ist.

14. Verfahren nach Anspruch 8, wobei das IP-Mobilitätsverfahren aus der Gruppe ausgewählt wird, die aus Simple IP, mobilem IP (MIP) und Proxy Mobile IP (PIMP) besteht.

## Revendications

1. Procédé de mobilité dans une communication poste à poste pour un premier poste, le procédé comprenant le fait :
d'enregistrer une première adresse de Protocole Internet (IP) et un procédé de mobilité IP du premier poste avec un traqueur P2P ;
de transmettre un rapport d'état de poste au traqueur P2P ;
d'établir une connexion poste à poste (P2P) avec un deuxième poste ;
de changer des emplacements et d'obtenir une deuxième adresse IP ;
d'enregistrer la deuxième adresse IP du premier poste avec le traqueur P2P par le biais du procédé de mobilité IP ; et
de transmettre des informations au deuxième poste dans la communication P2P.

2. Procédé de la revendication 1, dans lequel le rapport d'état de poste comporte un niveau de batterie du premier poste.

3. Procédé de la revendication 1, dans lequel le rapport d'état de poste comporte un changement de l'adresse IP du premier poste.

4. Procédé de la revendication 1, dans lequel le rapport d'état de poste comporte une bande passante disponible du premier poste.

5. Procédé de la revendication 4, dans lequel la bande passante est une bande passante de liaison montante.

6. Procédé de la revendication 4, dans lequel la bande passante est une bande passante de liaison descendante.

7. Procédé de la revendication 1, dans lequel le procédé de mobilité IP est choisi dans le groupe constitué d'IP simple, d'IP Mobile (MIP), et d'IP Mobile de Serveur Mandataire (PMIP).

8. Procédé de mobilité dans une communication poste à poste pour un traqueur P2P, le procédé comprenant le fait :
de recevoir et de stocker une première adresse de Protocole Internet (IP) et un procédé de mobilité IP à partir d'un premier poste ;
de recevoir un rapport d'état de poste à partir du premier poste ;
de recevoir une demande pour une liste de postes à partir d'un deuxième poste ;
de transmettre la liste de postes au deuxième poste ; et
de recevoir une deuxième adresse IP à partir du premier poste par le biais du procédé de mobilité IP.

9. Procédé de la revendication 8, dans lequel le rapport d'état de poste comporte un niveau de batterie du premier poste.

10. Procédé de la revendication 8, dans lequel le rapport d'état de poste comporte un changement de l'adresse IP du premier poste.

11. Procédé de la revendication 8, dans lequel le rapport d'état de poste comporte une bande passante disponible du premier poste.

12. Procédé de la revendication 11, dans lequel la bande passante est une bande passante de liaison montante.

13. Procédé de la revendication 11, dans lequel la bande passante est une bande passante de liaison descendante.

14. Procédé de la revendication 8, dans lequel le procédé de mobilité IP est choisi dans le groupe constitué d' IP simple, d'IP Mobile (MIP) et d'IP Mobile de Serveur Mandataire (PMIP).
